# EUROPEAN PATENT APPLICATION

(11) **EP 1 916 750 A2**
(43) Date of publication of application: **30.04.2008**
(21) Application number: 07118987.2
(22) Date of filing: 22.10.2007
(51) Int. Cl.: H02G 3/12

(54) **Method for fixing electrical boxes to walls and support for implementing the method**

(30) Priority: 24.10.2006 IT VE20060068
(71) Applicant: Leonetti, Mario, 87058 Spezzano Della Sila (IT)
(72) Inventor: Leonetti, Mario, 87058 Spezzano Della Sila (IT)
(74) Representative: Piovesana, Paolo

(57) **Abstract**

A method for fixing electrical boxes to walls, characterised by fixing at least one box to an intermediate element which is then fixed to the wall support structure.

## Description

The present invention relates to a method for fixing electrical boxes to walls and a support for implementing the method.

When the metal structure has been assembled and the plasterboard panels have been applied to it, the electrical wiring boxes are installed in the plasterboard walls in the following manner:
- the flexible conduits are passed between the plasterboard walls,
- said panels are cut to obtain holes the shape of which corresponds to the longitudinal section of the box,
- the boxes are inserted into the holes,
- said boxes are provisionally fixed to the panels between an annular flange provided in the box and a movable fin thereon,
- the ends of the flexible conduits are inserted through pushed-out holes in the box,
- the wiring accessory frame with the accessories mounted in it is fixed into the box by screws engagable in holes provided in the fins.

In this manner not only is the box frame fixed but the plasterboard panel is also clamped between the fins engaged by the screws and the box flange.

This known installation method presents however certain drawbacks, and in particular:
- a high labour requirement for inserting the flexible conduits through the holes of the box, which is not totally clamped,
- the box can disengage from the fins following this operation,
- possible positioning irregularity both in the vertical and horizontal sense if two or more boxes are mounted side by side or superposed.

If the boxes are instead to be fixed into masonry they are installed by positioning them inside a recess formed in the rough masonry and fixed with mortar after the ends of the flexible conduits for carrying the electric cables have been inserted through the box walls.

However this operating system presents other serious operational and practical problems in that the boxes are often too deeply inserted or project too much from the wall (plaster) surface, with the result that the bricklayer has to apply a greater thickness of mortar or even break the wall and reposition the box.

To this must be added the fact that the smooth surface of the box base does not provide an effective grip for the mortar, hence the box moves during positioning and sometimes becomes detached from the base by moving during application of the flexible conduit through which the electric cables pass.

The solution of filling the recess with a greater quantity of mortar leads to other drawbacks, and in particular:
- the mortar may fall out due to its weight.
- a greater effort is required to break it if the box is positioned incorrectly,
- a certain difficulty and inaccuracy in the work,
- a useless and costly time wastage.

These drawbacks are eliminated according to the invention by a method for fixing electrical boxes to walls as described in claim 1.

A preferred embodiment of the present invention and some variants thereof are described in detail hereinafter by way of non-limiting example with reference to the accompanying drawings, in which:

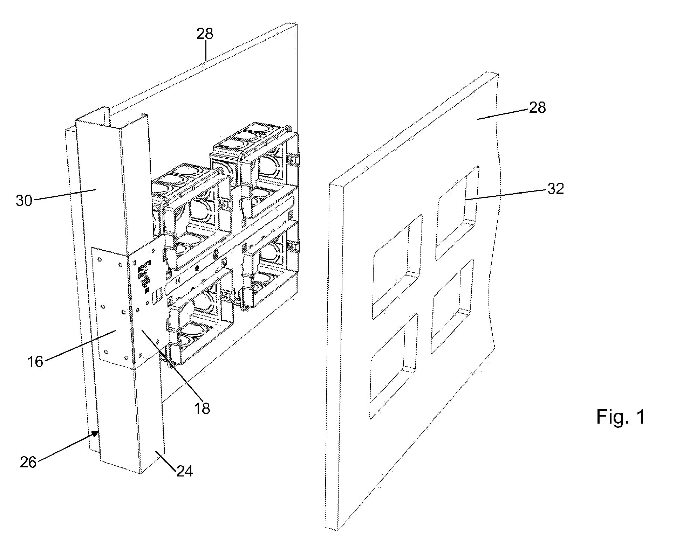

- Figure 1: is a perspective view, taken from one side, of a retainer according to the invention, applied to a frame;

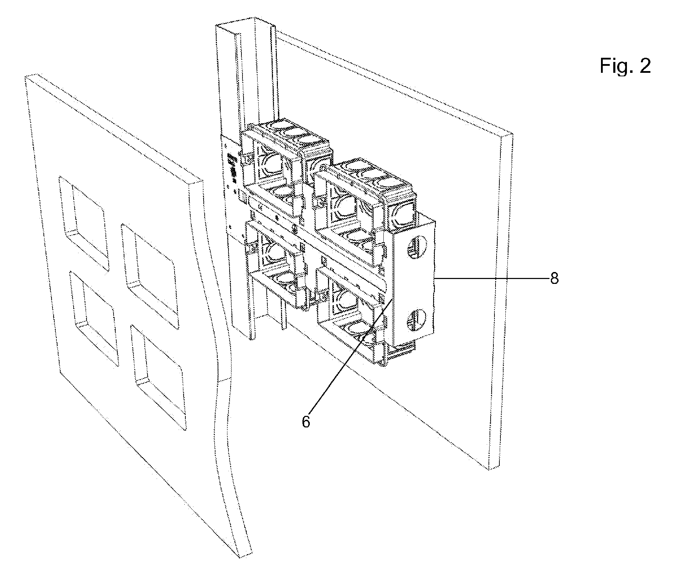

- Figure 2: is a view thereof, taken from the other side;

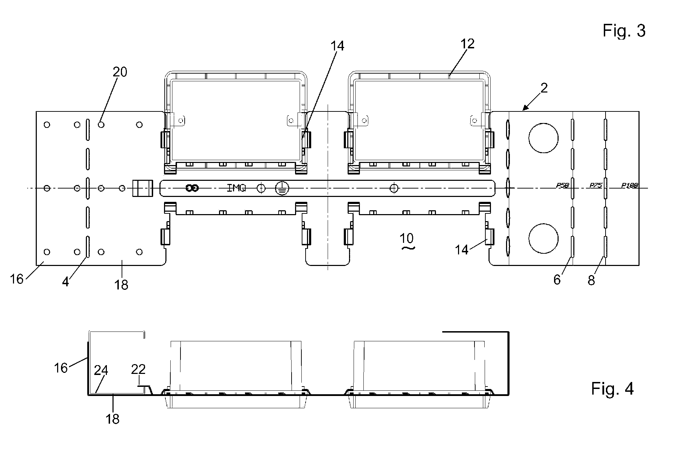

- Figure 3: is a frontal view thereof;
- Figure 4: is a longitudinal section therethrough;
- Figure 5: is a frontal view of a variant thereof;
- Figure 6: is a longitudinal section therethrough, when applied to masonry;
- Figures 7 and 8: show a further variant thereof.

As can be seen from the figures, the method for fixing electrical boxes to walls according to the invention uses a substantially rectangular metal retainer 2 comprising a plurality of transverse bending lines 4, 6, 8 respectively and four substantially rectangular seats 10 provided along the longitudinal edges of the plate and of length corresponding to the length of a traditional standardized plastic wiring accessory box 12.

The edges of the seats 10 are provided with fins 14 obtained by blank-cutting and bending the sheet metal to form suitable appendices for snap-engaging the box edges.

The bending lines 4 form in the retainer 2 two portions 16, 18 respectively, both comprising a plurality of holes 20, the portion 18 comprising a blank-cut portion projecting from the plane of the of the plate to form a U-shaped fin 22 with its cavity facing the free edge of the portion 16.

The distance between the groove in the U-shaped fin 22 and the line 4 corresponds substantially to the length of the flange 24 of the C-shaped upright 26 forming the support frame for the walls of plasterboard or other panel material.

To fix the retainer the procedure is as follows:

The metal frame forming the support structure for the two plasterboard walls 28, 28' is firstly constructed. The electrician then takes a retainer with the required number of seats 10 (one, two vertical, two horizontal, four) in which the boxes are already mounted, then after abutting the smooth vertical edge of the flange 24 of the profile bar against the groove of the U-shaped fin 22 while at the same time bending the band 16 at 90 about the face 18, the electrician fixes said bands 16 and 18 to the frame upright 26 by screws engaging the holes 20.

The electrician then positions the flexible conduits through which the electric cables are to pass and brings them to a position corresponding with the box apertures.

The electrician then bends at 90 one or more of the bands formed by the bending lines 6, 8 to create a spacer band perpendicular to the plane of the retainer, the width of which corresponds substantially to the width of the web 30 of the profile bar 26.

Rectangular holes 32 of dimensions corresponding to those of the box apertures are then made in the plasterboard, which is then fixed to the metal structure in traditional manner.

From the aforegoing it is apparent that the fixing method of the invention presents numerous advantages, and in particular:
- it enables the box to be correctly and easily positioned within the plasterboard structure without any problem of controlling horizontality and verticality in the case of several boxes,
- it enables the flexible conduits to be easily applied because of the stability of the box, which is already mounted on the retainer,
- it enables traditional wiring accessory boxes for masonry to be used.

In a variant, not shown in the drawings, the retainer and box are both made of plastic material (or other material) in one piece, the retainer being provided with incision lines, as in the preceding embodiment.

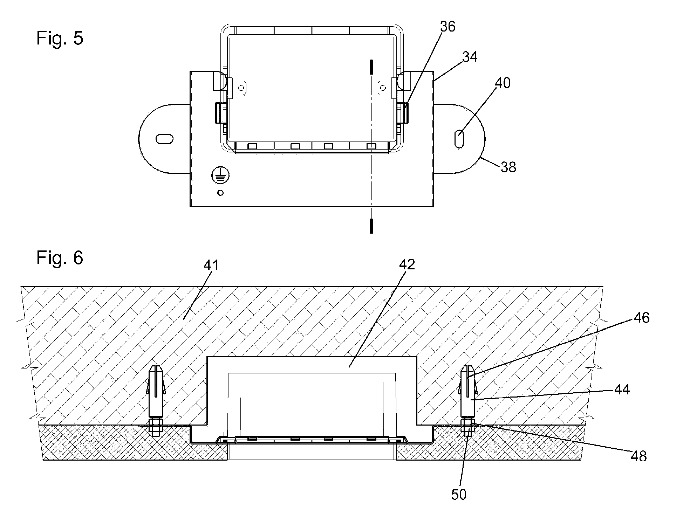

Figures 5-6 show a retainer 34 for fixing a wiring accessory box into masonry.

The retainer is made of metal and is provided with one or more fins 36 for snap-inserting the wiring accessory box. The lateral edges of the retainer extend into two lugs 38 provided with two mutually perpendicular slotted holes 40 to enable correct positioning within the masonry.

The box of this embodiment is mounted in the following manner.

The rough masonry 41, the recess/recesses and the chases leading to them are formed, then when the boxes have been inserted into said recesses the positions of the holes to be provided in the masonry, corresponding to the holes in the lugs 38, are marked on the masonry.

Expansion plugs 44 are then inserted into the holes and threaded pins 46 are inserted together with an adjustment nut 48.

The push-out regions through which the ends of the flexible conduits to carry the electric cables are to pass are then removed.

During this insertion stage the ends of the threaded pins 46 are inserted through the holes 40 in the lugs and are securely fixed to the masonry by a further fixing nut 50.

The excess pin portion is then cut off and subsequently covered during plastering.

Again in this embodiment the retainer and the box can be formed in one piece, and of any material.

From the aforegoing it is apparent that this embodiment presents the advantages of reliable and correct box positioning, rapidly and without the use of mortar.

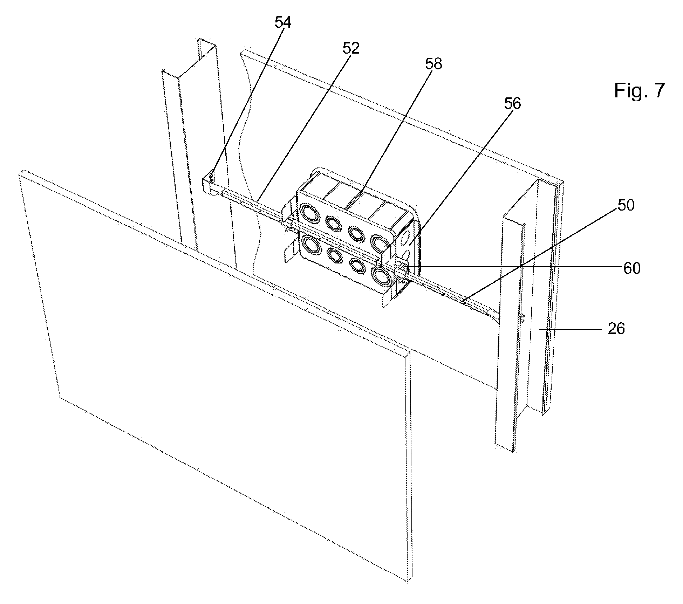

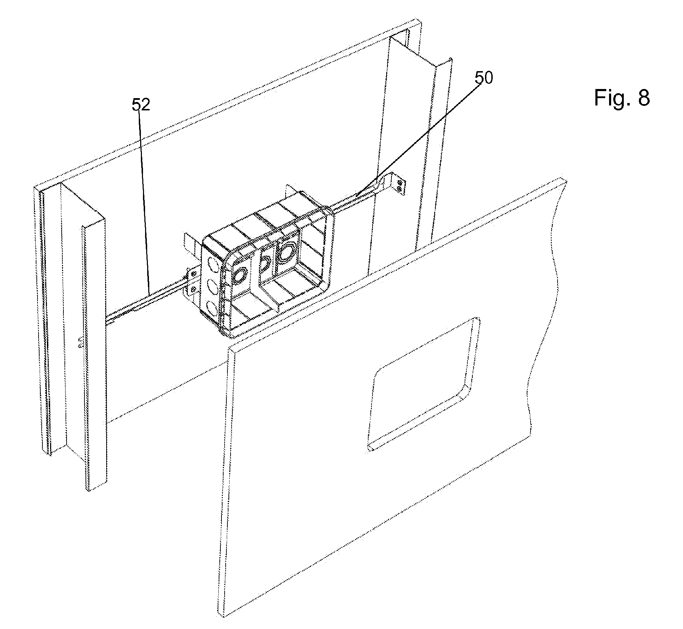

Figures 7 and 8 show a retainer for supporting junction boxes.

In this embodiment the retainer 50 consists of a rod 52 formed from two telescopically engaging parts with the ends 54 bent at 90 , and fixable to the uprights of the metal support structure for the plasterboard panels.

Specifically, two shoulders 56 engage the two parts of the rod to retain the junction box 58, they being provided with coupling elements 60 for their stable connection to the rod 52. Such coupling enables the boxes to be mounted either vertically or horizontally.

In a variant, not shown in the drawings, the ends of the telescopic rod are provided with a tooth obtained by blank-cutting and bending the sheet metal, and engagable in the web of a wooden profile.

The use of this embodiment comprises fixing the rod to the metal profiles, adjusting the position of the box along the rod and locking it, and applying the plasterboard panel in which a corresponding hole has been formed.

## Claims

1. A method for fixing electrical boxes to walls, **characterised by** fixing at least one box to an intermediate element which is then fixed to the wall support structure.

2. A method as claimed in claim 1, **characterised by** forming the intermediate element and the box in one piece.

3. A method as claimed in claim 1, **characterised by** using a wiring accessory box as the box.

4. A method as claimed in claim 1, **characterised by** using a junction box as the box.

5. A method as claimed in claim 1, **characterised in that** if the wall consists of a plasterboard panel or another panel-like structure, the box is fixed by means of the intermediate element to the metal frame supporting the plasterboard panel or other panel-like structure.

6. A method as claimed in claim 1, **characterised in that** if the wall is a brick wall a seat is formed therein for housing the box, which is then fixed to the edges of the seat by means of the intermediate element.

7. A support for fixing electrical boxes to walls, **characterised by** consisting of a retainer (2, 34, 52) comprising at least one seat (4) in which the electrical box (12) is housed.

8. A support as claimed in claim 7, **characterised in that** said retainer is provided with bending lines (4, 6, 8) perpendicular to its longitudinal axis and which define bands (16, 18) of different length, at least one of which is to be fixed to the metal structure (26) of a plasterboard wall or other plasterboard structure.

9. A support as claimed in claim 7, **characterised in that** the retainer and the box are formed in one piece.

10. A support as claimed in claim 7, **characterised in that** the retainer is provided with seats of length corresponding to the box length, said seats comprising appendices (14) which snap-engage the annular edge of the box (12).

11. A support as claimed in claim 7, **characterised in that** the retainer comprises a blank-cut portion projecting from its plane to form a U-shaped fin (22).

12. A support as claimed in claim 7, **characterised in that** the retainer (34) is provided at both ends with lugs (38) for its fixing to the masonry.

13. A support as claimed in claim 12, **characterised in that** the lugs are provided with holes (40) for the passage of screws (46) for their fixing to the masonry.

14. A support as claimed in claim 7, **characterised in that** the retainer is formed from two telescopically engaged rods (52) the ends of which are fixed to the uprights of the metal structure of the plasterboard wall or other panel-like structure.

15. A support as claimed in claim 14, **characterised by** comprising coupling elements (60) engagable with the rods (52) and provided with shoulders (56) for retaining the box.
